# EUROPÄISCHE PATENTSCHRIFT

(11) **EP 3 566 793 B1**
(45) Veröffentlichungstag und Bekanntmachung des Hinweises auf die Patenterteilung: **20.10.2021**
(21) Anmeldenummer: 19172888.0
(22) Anmeldetag: 07.05.2019
(51) Int. Cl.: B21D 5/00, B21D 5/02, B21D 55/00, F16P 3/14

(54) **SCHNEIDBUTZENERKENNUNG FÜR BIEGEZELLEN**
SLUG DETECTION FOR BENDING CELLS
DÉTECTION DE MATIÈRE EN EXCÈS À COUPER POUR CELLULES DE PLIAGE

(30) Priorität: 07.05.2018 CN 201810425484
(43) Veröffentlichungstag der Anmeldung: 13.11.2019
(73) Patentinhaber: TRUMPF Maschinen Austria GmbH & Co. KG., 4061 Pasching (AT)
(72) Erfinder: HAFLA, Alexander, 73666 Baltmannsweiler (DE); ZHANG, Chufan, 4061 Pasching (AT)
(74) Vertreter: Burger, Hannes

(56) Entgegenhaltungen:
- EP-A1- 1 254 729
- DE-U1-202008 003 444
- JP-A- H07 214 172
- US-A1- 2005 235 790
- US-B2- 7 080 534
- US-B2- 8 103 373

## Beschreibung

Die Erfindung betrifft ein Verfahren zur Detektion von Fremdkörpern, insbesondere Schneid- oder Stanzabfällen, zwischen zumindest einem Biegewerkzeug und einem umzuformenden Blechteil unter Verwendung von zumindest einer Lichtquelle und zumindest einem Lichtsensor.

Bei der Bearbeitung von gelaserten, gestanzten oder auch geschnittenen Blechen kommt es häufig vor, dass Fremdkörper in Form von Schneid- oder Stanzabfällen auf den Blechen verbleiben. Diese Fremdkörper werden auch Schneid- oder Stanzbutzen genannt. Durch den Einsatz von Ölen haften diese Rückstände bzw. Fremdkörper zum Teil sehr stark am Blech.

Für die Weiterverarbeitung von Blechen wie etwa beim Tiefziehen, Pressen oder Biegeumformen können derartige Fremdkörper, wie z. B. Schneid- oder Stanzbutzen, aber auch bereits loser Schneid- oder Stanzgrat zu Schäden am Werkzeug führen. Überdies können sich solche am Blech anhaftenden Fremdkörper u.U. vom Blech lösen und auf das Werkzeug übertragen werden. Verbleiben diese Fremdkörper am Werkzeug kann es im schlimmsten Fall passieren, dass eine Reihe von Werkstücken bzw. umzuformende Blechteile durch die Fremdkörper beschädigt werden.

Es ist daher wünschenswert eventuell vorhandene Fremdkörper möglichst frühzeitig zu erkennen. Dem Fachmann sind hierbei für Stanz- oder Schneidbutzen die Verwendung von elektromagnetischen Erkennungsvorrichtungen bekannt. Eine weitere vor allem im Stanzbereich bekannte und etablierte Stanzbutzenerkennung basiert auf der Messung und Verarbeitung von Schallemissionen. Hierbei findet ein Abgleich der akustischen Messsignale des von der Stanzvorrichtung laufend im Betrieb emittierten Schallsignals mit einem Referenzsignal statt. Bei Abweichung des Messsignals vom Referenzsignal wird die Stanzvorrichtung gestoppt. Leider kann diese Methode nur mit Einschränkungen bzw. gar nicht auf die Anforderungen einer Biegepresse angewandt werden, da erst bei beginnender Umformung, das heißt bereits im Prozess, ein akustisches Messsignal zur Verfügung steht. Das bedeutet allerdings, dass es hierbei für eine Unterbrechung oder Abbruch des Prozesses zu spät ist und eine eventuelle Beschädigung eines Werkzeugs und/oder Blechteils nicht mehr verhindert werden kann.

Eine optische Erfassung des Pressenraumes durch den Maschinenbediener ist sehr zeitaufwändig und kann u.U. nur einen Teilbereich der Werkzeug- und/oder Blechteiloberfläche abdecken. Dadurch ist die manuelle Sichtkontrolle ungeeignet und bildet im Zuge der zunehmenden Automatisierung eine ungenügende Maßnahme zur Erhöhung von Qualität der Blechteile und Verschleißschutz am Werkzeug.

Denkbar sind auch Kameraverfahren, welche die Blechteile oberflächlich vermessen um Stanz- bzw. Schneidabfälle zu erkennen. Aufgrund von wechselnden Lichtverhältnissen, eventuell ungeeigneter Oberflächenbeschaffenheit durch z.B. Ölrückstände und Verschmutzung und wechselnden Blechteilgeometrien sind solche Kamerasysteme jedoch nicht ausreichend geeignet um in einen Fertigungsprozess implementiert zu werden.

Die US 2005/235790 A1 offenbart ein Verfahren zur Sicherung einer Werkzeugmaschine mit einem oberen, ersten Werkzeugteil und einem unteren, zweiten Werkzeugteil. Dabei überwacht ein optoelektronischer Sensor ein räumliches Schutzfeld zwischen den Werkzeugteilen, wobei der optoelektronische Sensor sowohl für eine Absicherung eines Gefahrenbereichs an der Werkzeugmaschine, als auch für eine Vermessung des bearbeiteten Blechwerkstücks eingesetzt wird. Insbesondere kann mittels dem optoelektronischen Sensor ein Blechwerkstück, sowie ein in der jeweiligen Werkzeugmaschine eingesetztes Werkzeug geometrisch vermessen werden. Es soll dabei überprüft werden, ob das richtige Werkzeug eingespannt wurde, insbesondere ob Ober- und Unterwerkzeug tatsächlich zueinander passen, also kompatibel sind und daher ohne Bruchgefahr verwendet werden können. Ferner kann eine Vermessung von Blechwerkstück- oder Werkzeugbereichen bzw. eine Bestimmung des Schattenrisses von Blechwerkstück- oder Werkzeugbereichen erfolgen. Gemäß US 2005/235790 A1 kann neben einer Absicherung der Werkzeugmaschine und einem Überprüfen des jeweils eingesetzten Werkzeugs auch eine genaue Überprüfung eines durchgeführten Biegevorgangs stattfinden.

Aufgabe der vorliegenden Erfindung war es, die Nachteile des Standes der Technik zu überwinden und ein Verfahren zur Verfügung zu stellen, mittels derer ein Benutzer in der Lage ist, auf eine relativ einfache und effiziente Weise die Detektion von Fremdkörpern an einem Biegewerkzeug und/oder einem umzuformenden Blechteil vorzunehmen. Eine weitere Aufgabe der Erfindung war es, die Blechteilqualität zu erhöhen und/oder den Werkzeugverschleiß zu verringern.

Diese Aufgabe wird durch ein Verfahren gemäß den Ansprüchen gelöst.

Das erfindungsgemäße Verfahren zur Detektion von Fremdkörpern, insbesondere Schneid- oder Stanzabfällen, zwischen zumindest einem Biegewerkzeug und einem umzuformenden Blechteil bzw. Werkstück, kann auch als ein Verfahren zur Erhöhung der Blechteilqualität und/oder Verringerung des Werkzeugverschleißes verstanden werden und umfasst die folgenden Schritte:
- Bereitstellen einer Biegezelle, umfassend zumindest ein Oberwerkzeug und zumindest ein Unterwerkzeug, eine Anlagensteuerung, sowie zumindest eine Lichtquelle und zumindest einen, bevorzugt optoelektrischen, Lichtsensor zur Detektion von Fremdkörpern,
- Bereitstellen zumindest des Blechteils an einer vorgebbaren Position zwischen Oberwerkzeug und Unterwerkzeug in einer Offenstellung der Biegezelle,
- Detektion von Fremdkörpern zwischen dem Biegewerkzeug und des umzuformenden Blechteils, wobei die Detektion von Fremdkörper, insbesondere Schneid- oder Stanzabfällen
- mittels der zumindest einen Lichtquelle und des zumindest einen Lichtsensors eine Profilvermessung des zwischen Lichtquelle und Lichtsensor angeordneten zumindest einen Unterwerkzeugs erfolgt, und
- ein Abgleich des Unterwerkzeugprofils mit vorgebbaren Referenz- und/oder Sollprofilen in einer Anlagensteuerung erfolgt,
- und bei Übereinstimmung die Umformung des Blechteils eingeleitet wird,
- oder bei Abweichung eine Unterbrechung oder Abbruch des Verfahrens eingeleitet wird. Dabei ist vorgesehen, dass die zumindest eine Lichtquelle und/oder der zumindest eine Lichtsensor während der Profilvermessung entlang der Bewegungsrichtung des Biegewerkzeugs gegenläufig verschoben werden und die zumindest eine Lichtquelle und/oder der zumindest eine Lichtsensor mittels zumindest einer Ausrichtvorrichtung einander kontinuierlich zugewandt werden.

Das erfindungsgemäße Verfahren kann für die meisten Stanzen, Pressen und Biegemaschinen eingesetzt werden. Die meisten Anlagensteuerungen solcher Maschinen ermöglichen heutzutage standardmäßig die Einbindung von Lichtquellen und Lichtsensoren in den Prozessablauf. Üblicherweise wird ein umzuformendes Blechteil auf einem Unterwerkzeug angeordnet und gegenüber einem rückseitigen Anschlag derart positioniert, dass der Umform- bzw. Biegeprozess anschließend durch Absenkung bzw. Bewegung des Oberwerkzeuges in Richtung einer vorgebbaren Endposition korrekt durchgeführt werden kann. Das Oberwerkzeug befindet sich daher beim Positionieren des Blechteils in einer oberen Anschlagposition, was einer Offenstellung entspricht und nicht die größtmögliche Auslenkung des Oberwerkzeugs sein muss. Die vorgebbare Position des Blechteils kann daher von der erwünschten Biegeoperation, und den dafür notwendigen Werkzeuggeometrien prozessbedingt unterschiedlich sein.

Bei erfindungsgemäßen Verfahren wird durch die Profilvermessung des Unterwerkzeugs ein Unterwerkzeugprofil aufgenommen und an die Anlagensteuerung übertragen. Unter Profil wird im Kontext dieser Anmeldung ein lokaler Querschnitt bzw. die Oberflächenkontur des lokalen Querschnitts verstanden. Durch die Bauteilauslegung ist die Sollgeometrie und somit das Sollprofil des Unterwerkzeugs an jeder Stelle der Biegelinie des Unterwerkzeugs bekannt und wurde in der Anlagensteuerung verfügbar gemacht. Ein Referenzprofil kann im vorliegenden Verfahren in gleicher Weise wie die Detektion von Fremdkörpern erfolgen, nur dass hierbei in der Regel kein nachfolgender Biegevorgang direkt anschließt. Die Aufnahme des Referenzprofils kann deshalb nach dem Rüsten des Unterwerkzeugs erfolgen. Im Idealfall sollten Referenzprofil und Sollprofil identisch sein bzw. im Rahmen von Fertigungs- und Messtoleranzen liegen. Fremdkörpern, welche sich auf dem Unterwerkzeug befinden, bedingen eine Abweichung von der Referenz- und/oder Sollkontur bzw. dem jeweiligen Profil. Eine Abweichung welche eine Unterbrechung oder einen Abbruch auslösen kann ist im Kontext dieser Anmeldung eine Abweichung außerhalb eines vorgebbaren Toleranzbereiches. Somit erfolgt durch Abgleich des Unterwerkzeugprofils mit dem somit vorgebbaren Referenz- und/oder Sollprofilen in der Anlagensteuerung die Auswertung und automatisierte Entscheidung über eine Einleitung oder Unterbrechung bzw. Abbruch des Biegeprozesses. Dieses Vorgehen ist analog auf die Vermessung des Blechteils und/oder des Oberwerkzeugs zu übertragen.

Das erfindungsgemäße Verfahren weist gegenüber dem Stand der Technik unter anderem die Vorteile auf, dass es relativ einfach in bestehende Biegeverfahren einzuführen ist, die erforderlichen Umrüstmaßnahmen wie etwa Lichtquellen bzw. Lichtsensoren relativ günstig sind und einfach bewerkstelligt werden können. Die untere Detektionsgrenze der detektierbaren Fremdkörper ist lediglich durch die verwendeten Lichtquellen bzw. Lichtsensoren bestimmt und kann wenige Zehntel-, bevorzugt wenige Hundertstelmillimeter betragen. Bei entsprechender, dem Fachmann zuzumutendem Aufwand, ist es sogar möglich bis zu wenige Mikrometer große Fremdkörper prozesssicher zu detektieren. Für das erfindungsgemäße Verfahren eignen sich als Lichtquellen diskrete, also Einzelstrahlen bzw. punktförmig abgebende Lichtquellen. Auf der Detektionsseite können demnach punktförmige, aber bevorzugt linienförmige, und besonders bevorzugt flächenförmige Detektoren bzw. Lichtsensoren verwendet werden. Es können sowohl mehrere Lichtquellen als auch mehrere Lichtsensoren nebeneinander bzw. übereinander oder auch falls erforderlich versetzt zueinander angeordnet sein.

Somit wird ermöglicht, dass Fremdkörper auf der Oberfläche von Unterwerkzeug und/oder Oberwerkzeug und/oder Blechteil bereits vor dem eigentlichen Umform- bzw. Biegeschritt erkannt werden und der Prozess unterbrochen wird. Dies erhöht die Prozesssicherheit und vor allem die Qualität der Blechteile. Weiters wird durch die rechtzeitige Detektion und Unterbrechung die Gefahr einer eventuellen Beschädigung der Biegewerkzeuge effizient verringert, wodurch teure Stillstands- und/oder Reparaturkosten vermeidbar werden.

Ein Kontaktieren des Blechteils mit dem Unterwerkzeug und Oberwerkzeug durch Bewegen des zumindest einen Oberwerkzeugs in Richtung einer vorgebbaren Endposition kann ein nützlicher, allerdings nicht zwingend erforderlicher Zwischenschritt sein. Hierdurch kann ggf. eine Detektion von Fremdkörper gleichzeitig an Unter- und Oberwerkzeug, wie auch dem Blechteil durchgeführt werden.

Weiters kann es zweckmäßig sein, wenn die Profilvermessung seitlich, bevorzugt orthogonal, auf die Bewegungsrichtung des Oberwerkzeugs und entlang einer Biegelinie des Unterwerkzeugs erfolgt.

Abhängig vom Biegeverfahren bzw. den umzuformenden Blechteilen müssen die Biegewerkzeuge nicht zwingend eine in waagrechter Richtung ausgerichtete Biegelinie aufweisen, um welche das Blechteil umgeformt wird. Wesentlich ist, dass zumindest eine Lichtquelle und zumindest ein korrespondierender Lichtsensor genau entlang der Biegelinie des Unterwerkzeugs ausgerichtet oder auch ausrichtbar sind. Die Profilvermessung im rechten Winkel auf die Bewegungsrichtung des Oberwerkzeugs verringert die Gefahr von Abschattungseffekten und erhöht die Genauigkeit und Auflösung der Profilmessung.

Ferner kann vorgesehen sein, dass bei der Detektion von Fremdkörpern zusätzlich eine Profilvermessung des Blechteils und/oder des Oberwerkzeugs erfolgt und ein Abgleich des Blechteilprofils und/oder des Oberwerkzeugprofils mit vorgebbaren Referenz- und/oder Sollprofilen in einer Anlagensteuerung erfolgt.

Durch diese Maßnahme, unter der oben beschriebenen Vorgangsweise, können etwaige anhaftende Fremdkörper nicht nur nach dem Herabfallen auf das Unterwerkzeug, sondern bereits am Blechteil erkannt werden. Ebenso ist eine Detektion bzw. Erfassung von Fremdkörpern an der Oberseite, also dem Oberwerkzeug zugewandten Seite möglich. Letztlich kann auch die Erfassung des Oberwerkzeugprofils analog dazu genutzt werden um etwaige Fremdkörper zu detektieren. Hierdurch kann die Prozesssicherheit erhöht werden. Ebenso können Stillstände zum Zwecke von Wartung, Reparatur und/oder Werkzeugwechsel reduziert oder sogar vermieden werden, da die Gefahr einer Beschädigung oder verfrühten Verschleiß deutlich reduziert werden kann.

Darüber hinaus kann vorgesehen sein, dass die Profilvermessung durch Emission eines parallelen Strahlenbündels von der zumindest einen Lichtquelle und Detektion eines Schattenbildes vom zumindest einen Lichtsensor erfolgt.

Die Verwendung eines parallelen Strahlenbündels weist den Vorteil auf, dass ein größerer Bereich gleichzeitig vermessen werden kann. Die Aufzeichnung eines entsprechenden Schattenbildes entspricht somit dem verarbeiteten Signal am Lichtsensor, welcher z.B. als Liniensensor oder auch positionssensitiver 2D-Lichtsensor ausgeführt sein kann. Hierdurch kann eine relativ schnelle Profilvermessung durchgeführt werden, wodurch die Gesamtprozessdauer gering gehalten werden kann. Durch die beschriebene seitliche Profilvermessung ist es möglich Biegewerkzeuge und/oder Blechteile mittels parallelem Strahlenbündel aufgrund ihrer geradlinigen, ebenen Geometrie mit sehr wenig Aufwand, also bereits durch wenige Messpunkte, effizient zu vermessen und die Detektion von Fremdkörpern durchzuführen.

Vorteilhaft ist auch eine Ausprägung, gemäß welcher vorgesehen sein kann, zur Erzeugung des parallelen Strahlenbündels zumindest eine als Laser ausgebildete Lichtquelle verwendet wird.

Der Einsatz von Linien- oder Blocklasern ist für die Erzeugung von parallelen Strahlenbündeln aufgrund der Eigenschaften von Lasern besonders geeignet. Die kohärente Strahlung von Lasern, sowie die vom Konstrukteur wählbare Wellenlänge des einzusetzenden Lasers, also auch Wellenlängen außerhalb des sichtbaren Lichts, kann das Verfahren weitestgehend vom Umgebungslicht unabhängig machen. Hierdurch steigt die Präzision und Messartefakte können vermieden werden, wodurch die Prozesssicherheit erhöht wird.

Die zumindest eine Lichtquelle und/oder der zumindest eine Lichtsensor werden während der Profilvermessung entlang der Bewegungsrichtung des Biegewerkzeugs verschoben.

Durch diese Maßnahme wird ermöglicht, dass der erfassbare Detektionsbereich für Unterwerkzeug und/oder Oberwerkzeug und/oder Blechteil signifikant erhöht werden kann, ohne auf überdimensionierte Lichtquellen und/oder Lichtsensoren angewiesen zu sein.

Im einfachsten Fall können Lichtquelle und korrespondierender Lichtsensor in Bewegungsrichtung des Oberwerkzeugs bewegt werden und führen dabei eine Art Scan- oder Rasterbewegung durch. Dabei kann es vorteilhaft sein, wenn Lichtquelle und/oder Lichtsensor an einem Pressbalken, welcher das Oberwerkzeug bewegt, oder der Werkzeugaufnahme des Oberwerkzeuges gekoppelt angeordnet ist. Es ist natürlich auch denkbar, dass Lichtquelle und/oder Lichtsensor an eigenständigen, lediglich an der Biegezelle angeordneten Halterungen montiert bzw. gekoppelt sind.

In einem weiteren Fall können entweder Lichtquelle und/oder Lichtsensor stationär verbleiben oder nur einen Teil des Weges in Bewegungsrichtung durchführen, wobei die korrespondierende Lichtquelle und/oder der Lichtsensor einen größeren Weg durchführt. Dies kann besonders bei unterschiedlich großen Lichtquellen und/oder Lichtsensoren vorteilhaft sein und ermöglicht somit eine kostenoptimierte Anlagenauslegung.

Überdies wird durch eine Bewegung der zumindest einen Lichtquelle und/oder des zumindest einen Lichtsensors während der Profilvermessung entlang, also nicht nur in sondern auch gegen, der Bewegungsrichtung des Biegewerkzeugs, eine Vermessung von nicht horizontal ausgerichteten Werkzeugen ermöglicht. Außerdem kann durch die Bewegbarkeit die erforderliche Größe bzw. Anzahl der zumindest einen Lichtquelle und/oder des zumindest einen Lichtsensors reduziert werden, wodurch sich ein Kostenvorteil ergibt.

Die zumindest eine Lichtquelle und/oder der zumindest eine Lichtsensor werden während der Profilvermessung entlang der Bewegungsrichtung des Biegewerkzeugs gegenläufig verschoben und die zumindest eine Lichtquelle und/oder der zumindest eine Lichtsensor werden mittels zumindest einer Ausrichtvorrichtung einander kontinuierlich zugewandt.

Dies ist besonders bei sehr großen bzw. langen Biegewerkzeugen von Vorteil. Hier kann es prozessbedingt erforderlich sein, dass eine Bombierung bzw. Ausbauchung z.B. des Unterwerkzeugs vorhanden ist, welche eine geradlinige Vermessung des Werkzeugprofils über die gesamte Biegelinie ausschließen würde. Durch die angegebene gegenläufige Bewegung und die gleichzeitige Ausrichtung der Lichtquelle und des korrespondierenden Lichtsensors wird eine Korrektur der Winkelposition entlang der Biegelinie des

Umformwerkzeugs ermöglicht. Hierdurch kann also an jedem Punkt der Biegelinie des Umformwerkzeugs eine Profilvermessung durchgeführt werden.

Darüber hinaus kann vorgesehen sein, dass die Bewegung der zumindest einen Lichtquelle und/oder des zumindest einen Lichtsensor während der Profilvermessung mit der Bewegung des Oberwerkzeugs gekoppelt ist.

Diese Maßnahme lässt sich anlagenseitig relativ einfach realisieren und vermeidet zusätzliche Halterungen bzw. separate Bewegungsvorrichtungen für Lichtquellen und/oder Lichtsensoren. Die Anordnung von Lichtquelle und/oder Lichtsensor an einem Pressbalken, dem Oberwerkzeug, oder auch der Werkzeugaufnahme des Oberwerkzeuges kann lösbar, also koppelbar, sein. Dadurch lässt sich bei Werkzeug bzw. Blechteilwechsel eine schnelle Einrichtung und Anordnung der Detektionsmittel erzielen.

Weiters kann vorgesehen sein, dass zur Profilvermessung zumindest ein positionssensitiver, bevorzugt zweidimensionaler, Lichtsensor verwendet wird.

Im Vergleich zu diskreten oder punktförmigen Messverfahren hat sich gezeigt, dass der Einsatz von positionssensitiven Detektoren (PSD) bzw. Lichtsensoren einen deutlichen zeitlichen Vorteil bringen können. Durch geeignete Größe der PSD kann die Detektion von Fremdkörpern zeitgleich vom Unterwerkzeug, dem Oberwerkzeug und dem Blechteil durchgeführt werden. Weiters ist die Möglichkeit gegeben, den PSD stationär an der Biegezelle zu belassen, wodurch ein möglicher Einrichtaufwand bei Werkzeugwechsel zumindest einseitig entfallen kann.

Gemäß einer besonderen Ausprägung ist es möglich, dass der Abgleich durch den Vergleich von Messzeitpunkten des Unterwerkzeugprofils und/oder des Blechteilprofils mit vorgebbaren Zeitpunkten korrespondierender Referenz- und/oder Sollprofilen erfolgt.

Der Vergleich des gemessenen Werkzeug- bzw. Blechteilprofils erfolgt hierbei anhand der zeitlichen Abfolge von eintreffenden korrespondierenden Messsignalen, und den zeitlich aufgrund eines Referenz- bzw. Sollprofils erwarteten Messwerten. Das bedeutet, dass bei einem Scan entlang der Bewegungsrichtung jeder Punkt eines Messprofils einen Messwert bzw. Signalwert zu einem gewissen Zeitpunkt und somit einer gewissen Bewegung entspricht. Die Abweichung eines Messwerts vom Referenz- bzw. Sollwert dieser Kurve entspricht der Abweichung des Messprofils von einem Referenz- bzw. Sollprofil, und gibt somit das Vorhandensein eines Fremdkörpers an. Die Messsignale können als kumulatives Messsignal aufgenommen werden, wodurch ein Fremdkörper eine kurzzeitige Änderung der Steigung des aufgezeichneten Messsignals auslösen kann. Dies kann für eine schnellere Erkennung von Abweichungen vorteilhaft sein.

Entsprechend einer vorteilhaften Weiterbildung kann vorgesehen sein, dass zur Erhöhung der Auflösung des Unterwerkzeugprofils und/oder des Blechteilprofils und/oder des Oberwerkzeugprofils bei der Profilvermessung ein im Strahlengang des Lichts vor dem zumindest einen Lichtsensor angeordnetes Objektiv verwendet wird.

Der Strahlengang des Lichts erstreckt sich von der Lichtquelle zum Lichtsensor. Die Verwendung zumindest eines Objektivs oder auch Linse ermöglicht die Vergrößerung des Messprofils, und damit etwaiger Fremdkörper. Somit wird auf relative einfache Weise die Auflösung des Messprofils veränderbar gemacht. Es ist auch denkbar, dass das Objektiv hierbei in seinem Abstand zur Lichtquelle bzw. zum Lichtsensor veränderbar angeordnet ist. Somit wird eine De-/Fokussierung und gezielte Wahl der Vergrößerung möglich. Durch dieses Vorgehen kann die Vergrößerung des Messprofils auf die verfügbare Detektorfläche des Lichtsensors abgestimmt werden, wodurch auch unterschiedlich große Biegewerkzeug- und/oder Bleichteilprofile mit derselben Lichtquellen- bzw. Lichtsensoranordnung vermessen werden können.

Insbesondere kann es vorteilhaft sein, wenn zur Erstellung des Referenzprofils des Unterwerkzeugs und/oder des Oberwerkzeugs eine Profilvermessung nach einem erstmaligen Einbau oder nach einem Wiedereinbau bzw. Rüsten des Unter- und/oder Oberwerkzeugs erfolgt.

Die Aufnahme bzw. Erstellung eines Referenzprofils ist beispielsweise in Stillstands- bzw. Nebenzeiten möglich und ermöglicht eine Verfolgung und Monitoring des Werkzeugzustandes über einen längeren Zeitraum. Dies erlaubt die Kontrolle des Abnutzungsgrades bzw. Verschleißes an den Biegewerkzeugen und durch eine Speicherung der Daten in der Anlagensteuerung darüber hinaus eine Prognosemöglichkeit für Wartungsintervalle und dergleichen. Weiters kann durch die Erstellung eines Referenzprofils zumindest des Unter- und Oberwerkzeugs, aber auch des Blechteils, dazu genutzt werden eine Überprüfung durchzuführen ob das richtige Biegewerkzeug bzw. Blechteil gerüstet wurde. Durch diese Maßnahmen können die Prozesskosten optimiert und Ausfallszeiten bzgl. Wartung, Reparatur und dergleichen reduziert werden.

Zum besseren Verständnis der Erfindung wird diese anhand der nachfolgenden Figuren näher erläutert.

Es zeigen jeweils in stark vereinfachter, schematischer Darstellung:
- Fig.1: Beispiel einer Biegezelle mit möglicher Messanordnung;
- Fig.2: Schematischer Aufbau und Messprinzip des Verfahrens ohne Fremdkörper a) bzw. mit detektierbarem Fremdkörper b);
- Fig.3: Schematischer Aufbau und Messprinzip des Verfahrens bei Bewegung zumindest der Lichtquelle a), bei Bewegung von Lichtquelle und/oder Lichtsensor b), bzw. bei gegenläufiger Bewegung von Lichtquelle und/oder Lichtsensor c);
- Fig.4: Beispiel des Messprinzips bei Verwendung von Überwachungspunkten;
- Fig.5: Beispiel des Messprinzips bei Verwendung eines Überwachungsfeldes;
- Fig.6: Mögliche Anordnung bei der Verwendung eines Objektivs zur Vergrößerung eines Fremdkörpers.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

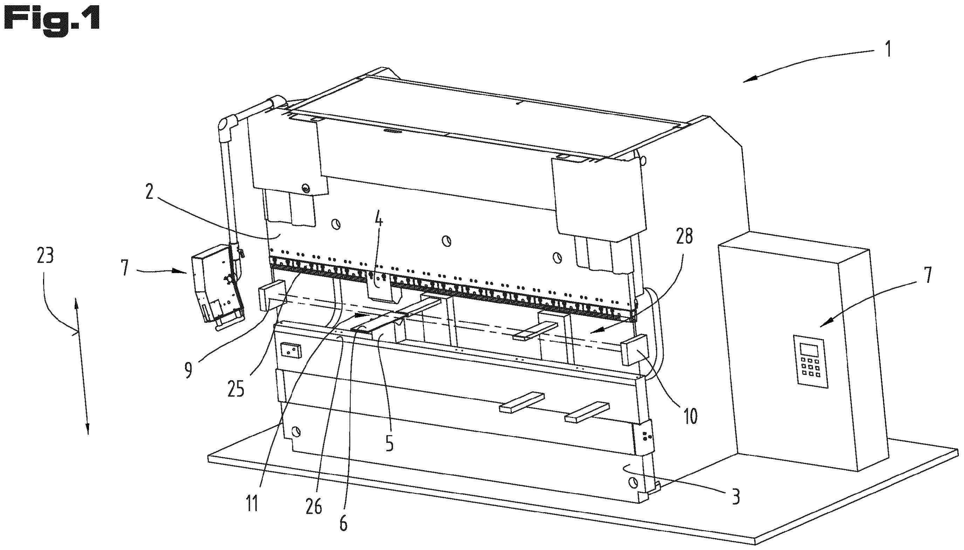

In Fig. 1 ist schematisch eine Biegezelle 1 dargestellt, welche für das erfindungsgemäße Verfahren verwendet werden kann. Die Biegezelle 1 weist einen horizontalen Pressbalken 2 auf, welcher durch nicht weiter dargestellte Antriebseinheiten in Bewegungsrichtung 23 und zurück beweglich ausgeführt ist. Am Pressbalken 2 kann das Oberwerkzeug 4 direkt, oder wie in Fig. 1 dargestellt auch an einer oberen Werkzeugaufnahme 25 angeordnet sein. Analog dazu ist in Fig. 1 ein Tischbalken 3 ersichtlich, welcher den Unterteil der Biegezelle 1 ausbildet. Am Tischbalken 3 kann das Unterwerkzeug 5 direkt, oder wie in Fig. 1 dargestellt auch an einer unteren Werkzeugaufnahme 26 angeordnet sein. In Vertikalrichtung, also im vorliegenden Fall der Y-Richtung, welche mit der Bewegungsrichtung 23 zusammenfällt sind das Ober- und Unterwerkzeug 4,5 fluchtend angeordnet. Ein mehrteiliger Maschinenrahmen verbindet den Oberteil mit dem Unterteil der Biegezelle 1.

Weiters in Fig. 1 ersichtlich ist eine Anlagensteuerung 7, welche mittels eines fixen oder auch flexiblen Terminals für den Maschinenbediener zur Verfügung steht. In der gewählten Darstellung ist ein einfaches Blechteil 6 dargestellt, welches in einer vorgebbaren Position zumindest teilweise auf dem Unterwerkzeug 5 aufliegt. Der Einfachheit halber ist hier nur ein Blechstreifen als Blechteil 6 dargestellt, welcher an einem Hinteranschlag anliegt.

Überdies sind in Fig. 1 schematisch eine Lichtquelle 9 an einer Seite des Pressenraumes 28, und gegenüberliegend davon ein Lichtsensor 10. Im gewählten Ausführungsbeispiel sind Lichtquelle 9 und Lichtsensor 10 am Oberteil der Biegezelle 1, d.h. im konkreten Fall am Pressbalken 2 angeordnet. Hierdurch ergibt kann durch Bewegen des Pressbalkens 2, respektive des Oberwerkzeugs 4, eine gemeinsame Bewegung der Lichtquelle 9 bzw. des Lichtsensors 10 erzielt werden.

Zur Durchführung des erfindungsgemäßen Verfahrens wird die Detektion von Fremdkörpern 8 somit durch eine Profilvermessung des zwischen Lichtquelle 9 und Lichtsensor 10 angeordneten Unterwerkzeugs 5 vorgenommen. Es ist gleichermaßen denkbar, dass Lichtquelle 9 und Lichtsensor 10 auch am Unterteil der Biegezelle 1, wie etwa der unteren Werkzeugaufnahme 26 oder direkt am Tischbalken 3 angeordnet sind. Ebenso sind separate Halterungen vorstellbar welche die zumindest eine Lichtquelle 9 und korrespondierende Lichtsensor/en 10 mit der Biegezelle 1 koppeln oder verbinden.

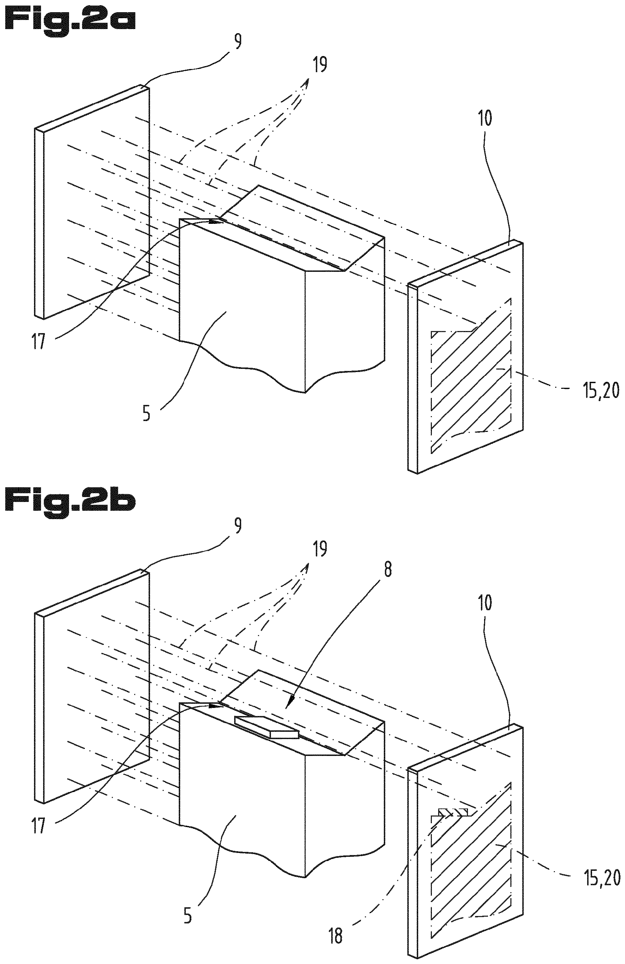

Fig. 2 zeigt eine schematische Darstellung des grundsätzlichen Messprinzips der vorliegenden Erfindung auf. Dabei sind in Fig. 2a und 2b lediglich eine Lichtquelle 9 und ein korrespondierender Lichtsensor 10 dargestellt. Im dargestellten Fall, wird von der Lichtquelle 9 ein paralleles Strahlenbündel 19 ausgesandt, welches nur teilweise am Lichtsensor 10 ankommt, da es zu dem Teil vom dazwischen angeordneten Unterwerkzeug 5 absorbiert wird. Das entstehende Unterwerkzeugprofil 15 kann vereinfacht als Schattenbild 20 verstanden und dargestellt werden, welches mit einem Referenzprofil 12 und/oder einem Sollprofil 13 von der Anlagensteuerung 7 verglichen werden kann.

Der in Fig. 2a dargestellte Fall entspricht einer Übereinstimmung des gemessenen Unterwerkzeugprofils 15 mit dem Referenzprofil 12 bzw. dem Sollprofil 13, wodurch von der Anlagensteuerung 7 die Umformung des Blechteils 6 eingeleitet wird. Der Blechteil 6 ist zum einfachen Verständnis hier nicht dargestellt.

Der in Fig. 2b dargestellte Fall entspricht einer Abweichung des gemessenen Unterwerkzeugprofils 15 vom Referenzprofil 12 bzw. vom Sollprofil 13, wodurch von der Anlagensteuerung 7 eine Unterbrechung oder ein Abbruch des Verfahrens eingeleitet wird. Die Abweichung resultiert durch die Detektion eines Fremdkörpers 8, im dargestellten Fall einer Schneidbutze, welcher auf dem Unterwerkzeug 5 liegt. Der Fremdkörper 8 verursacht mit seinem Fremdkörperprofil 18 eine Abweichung vom Referenz- bzw. Sollprofil 12, 13, wie in Fig. 2b skizziert.

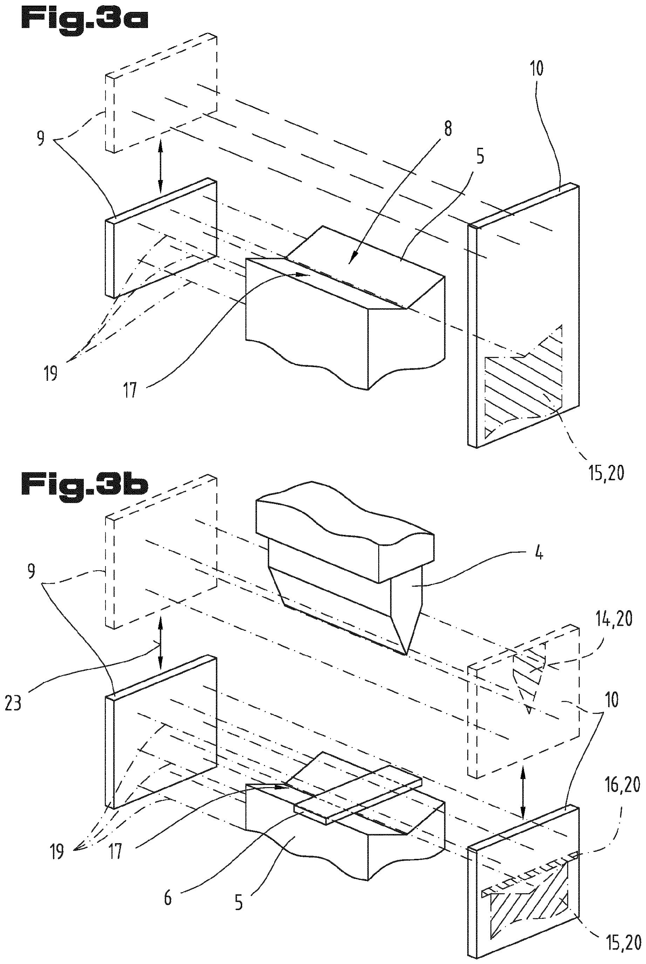

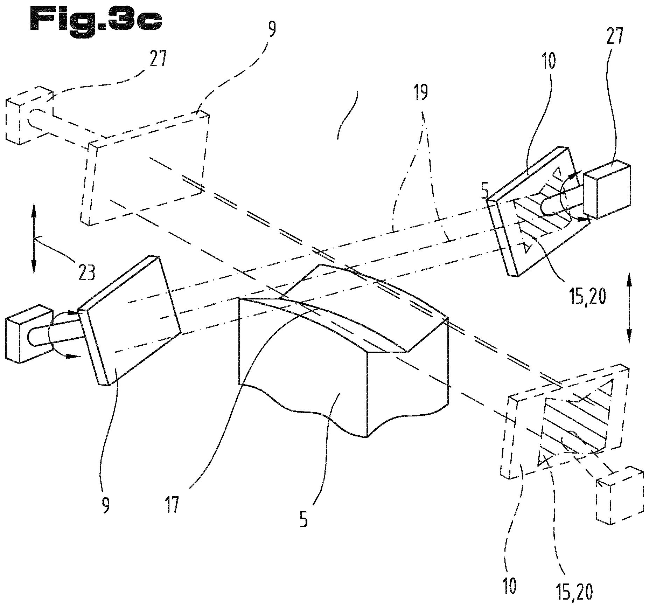

Wie aus den allgemeinen Erläuterungen hervorgehend ist es möglich mittels dem erfindungsgemäßen Verfahren ebene, also geradlinige Unterwerkzeugprofile 15 und/oder Oberwerkzeugprofile 14 und sogar leicht gekrümmte bzw. bombierte Biegewerkzeugoberflächen zu vermessen. In Fig. 3 sind einige mögliche Bewegungen der zumindest einen Lichtquelle 9 und/oder des zumindest einen Lichtsensor 10 gegenüber dem Unterwerkzeug 5 schematisch dargestellt.

Fig. 3a stellt ein Ausführungsbeispiel dar, in welchem der Lichtsensor 10 stationär verbleibt. In diesem Fall ist ein zweidimensionaler, positionssensitiver Detektor bzw. Lichtsensor 10 dargestellt. Er misst die von der Lichtquelle 9 emittierte Lichtstrahlung über einen Bereich, also eine zweidimensionale Fläche. Die Lichtquelle 9 kann als punktförmige aber auch linienförmige bzw. flächenförmige Lichtquelle 9 ausgeführt sein und wird in Bewegungsrichtung 23 des Oberwerkzeugs 4 am Unterwerkzeug 5 vorbeigeführt. Die Lichtquelle 9 ist deshalb an einer beispielhaften oberen Position, also in Y-Richtung oberhalb einer beispielhaften unteren Position, strichliert dargestellt. Die Bewegung der Lichtquelle 9 ist durch einen Pfeil in Bewegungsrichtung 23 parallel zum Lichtsensor 10 angedeutet. Der Lichtsensor 10 nimmt die von der Lichtquelle 9 emittierte direkt auftreffende Lichtstrahlung auf, und wandelt diese Information in Messsignale um, welche von der Anlagensteuerung 7 als ein Unterwerkzeugprofil 15 bzw. Schattenbild 20 ausgewertet werden. Durch die Bewegung der Lichtquelle 9 können die Messsignale auch als Bewegungs- bzw. Zeit-Verlauf ausgewertet werden. Somit kann lokal, also von der Auflösung des Lichtsensors 10 abhängig eine positionsgenaue Analyse des zeitlichen Auftretens bzw. Verschwindens der Lichtstrahlung bzw. der Messsignale ermittelt werden.

Fig. 3b stellt ein Ausführungsbeispiel schematisch dar, in welchem sowohl der Lichtsensor 10 als auch die Lichtquelle 9 zumindest über einen Teil des Weges in Bewegungsrichtung 23 des Oberwerkzeugs 4 verschoben bzw. bewegt werden. Die strichlierte Darstellung der Lichtquelle 9 bzw. des Lichtsensors 10 deuten eine erste, obere Messposition an, bei der die Profilvermessung des Oberwerkzeugs 4 vorgenommen wird. Wie schematisch angedeutet, findet analog zu obigem Beispiel eine Auswertung des Oberwerkzeugprofils 14 anhand des Schattenbildes 20 bzw. eines Bewegungs- bzw. Zeit-Verlaufs (z.B. y bzw t) an den einzelnen Messpunkten statt. Wie in Fig. 3b unschwer ersichtlich, ist eine kontinuierliche Profilvermessung während der Bewegung der Lichtquelle 9 bzw. des Lichtsensors 10 möglich. In der Darstellung ist für die zweite, untere Messposition dargestellt, dass sowohl die Profilvermessung des Blechteils 6 sowie des Unterwerkzeugs 5 durchgeführt wurde. Die Lichtquelle 9 und der Lichtsensor 10 können dabei gleichmäßig, stufenweise, oder jeweils auch nur über einen Teil des Weges in Bewegungsrichtung 23 bewegt werden. Das korrespondierende Blechteilprofil 16 bzw. Unterwerkzeugprofil 15 ist schematisch dargestellt und deren Auswertung kann analog zu den obigen Ausführungsbeispielen in Fig. 2a und 2b bzw. Fig. 3a durchgeführt werden.

Wie in Fig. 3c schematisch angedeutet kann das erfindungsgemäße Verfahren eine gegenläufige Bewegung von Lichtquelle 9 und Lichtsensor 10 in bzw. gegen die Bewegungsrichtung 23 aufweisen. Dies kann insbesondere dann nützlich sein, wenn das Verfahren zur Detektion von Fremdkörpern 8 auf Biegewerkzeugen 4, 5 mit leicht bombierter bzw. ausgebauchter, oder aber auch nicht horizontal ausgerichteter, Oberfläche angewendet werden soll. Zusätzlich zur Bewegung erfolgt dabei eine Ausrichtung von Lichtquelle 9 und korrespondierendem Lichtsensor 10 mittels zumindest einer Ausrichtvorrichtung 27. Die zumindest eine Ausrichtvorrichtung sorgt hierbei dafür, dass die Winkelposition der Lichtquelle 9 gegenüber dem Lichtsensor 10 laufend korrigiert wird, um die Auflösung maximieren. Somit ist es möglich das Unterwerkzeug 5 entlang der gesamten Biegelinie 17 zu vermessen bzw. abzurastern. Dabei kann ein entsprechendes Unterwerkzeugprofil 15 über die gesamte Werkzeuglänge erhalten werden. Die für die oben beschriebenen Ausführungsformen verwendete Auswertung bzw. Abgleich zwischen Unterwerkzeugprofil 15 und Referenzprofil 12 und/oder Sollprofil 13 ist analog auf dieses Ausführungsbeispiel, sowie den Fall eines Oberwerkzeugs 4 mit Bombierung in Bewegungsrichtung 23 anwendbar.

Für die in den Fig. 1 bis Fig. 4 dargestellten Lichtquellen 9 können sowohl diskrete Lichtquellen 9, aber bevorzugt Linien- oder Flächenlichtquellen verwendet werden. Wie in den Fig. 3a bis 3c dargestellt ist vor allem die Verwendung eines parallelen Strahlenbündels 19 zur gleichzeitigen und flächigen Erfassung des Messprofils vorteilhaft.

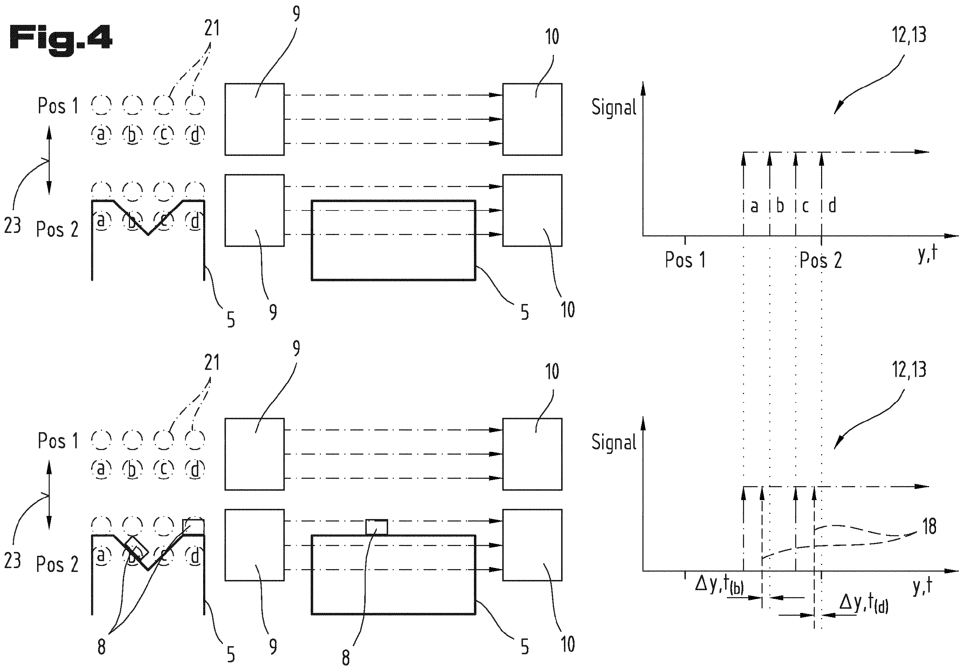

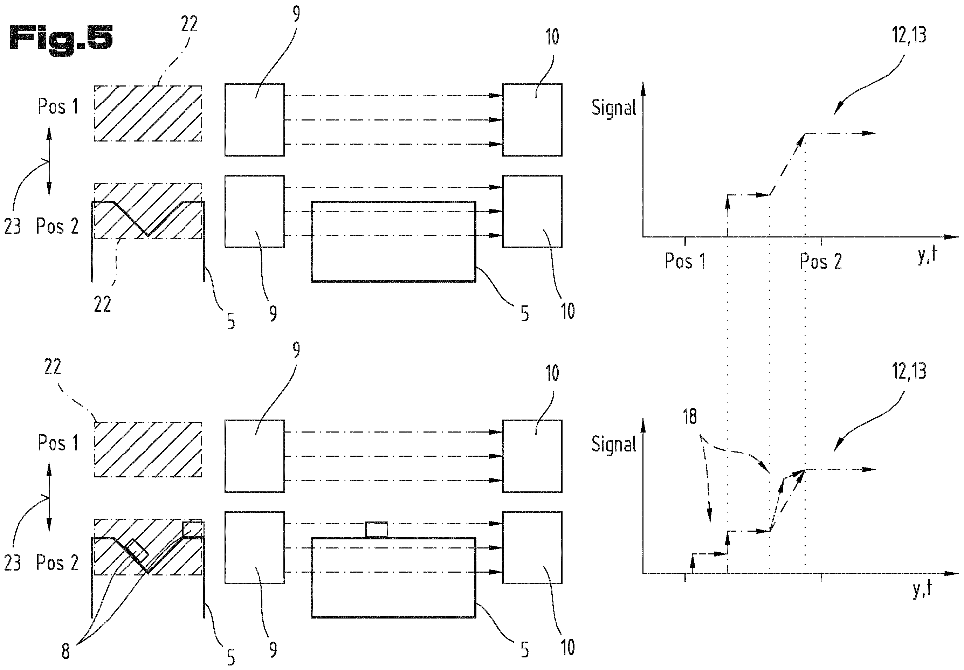

Fig. 4 und Fig. 5 stellen schematisch Möglichkeiten der Messsignalerstellung bzw. der Profilvermessung anhand eines Unterwerkzeugs 5, sowie der Auswertung bzw. dem Abgleich in der Anlagensteuerung 7 dar. Fig. 4a bis Fig. 4d stellen schematisch eine mögliche Vorgehensweise unter Verwendung von punktförmigen Lichtquellen 9, also von einzelnen Überwachungspunkten 21, dar. Fig. 5a bis Fig. 5d stellen schematisch eine mögliche Vorgehensweise unter Verwendung von flächenförmigen Lichtquellen 9, also eines Überwachungsfeldes 22, dar. Die beiden Beispiele können auch miteinander kombiniert werden. Die beschriebene Vorgehensweise ist analog auf die Profilvermessung von Blechteilen 6 und oder Oberwerkzeugen 4 anwendbar.

Wie in Fig. 4a und Fig. 5a gezeigt, kann an einer oberen, ersten Position (Pos 1) begonnen werden von der Lichtquelle 9 Lichtstrahlung in Richtung Lichtsensor 10 zu emittieren. Ausgehend von Pos 1 wird nun das Messsignal während der Bewegung der Lichtquelle 9 und/oder des Lichtsensors 10 zumindest bis zu einer unteren, zweiten Position 2 (Pos 2) gemessen, wie in Fig. 4b und Fig. 5b gezeigt. Die aufgenommenen Messsignale sind als Funktion der Bewegung bzw. Zeit in Fig. 4 und 5 dargestellt. Die Funktion eines kumulativ aufgenommenen Messsignals über die Bewegung bzw. Zeit ist schematisch in Fig. 5 dargestellt. Die Fig. 4a,b und Fig. 5a,b zeigen eine Messprofilerstellung für ein Unterwerkzeug 5 ohne Fremdkörper 8. Die Erstellung eines Referenzprofils 12 kann in der beschriebenen Weise vorgenommen werden. Bei Neuaufrüstung eines Werkzeugs kann der Einrichter bzw. die Anlagensteuerung 7 das Referenzprofil 12 z.B. von einer Profilvermessung bei der Produktion des letzten guten Blechteils 6 aufrufen und mit den aktuellen Messsignalen vergleichen. Somit wird die Einrichtung der Biegezelle 1 bei Werkzeugwechsel erleichtert. Die Einrichtzeit wird deutlich verkürzt. Fehler nach der Werkzeugwartung werden sofort erkannt.

Im Falle von diskreten Lichtquellen 9 erfolgt die Detektion von Fremdkörpern 8 anhand von einzelnen Überwachungspunkten 21, wie in Fig. 4c,d dargestellt. Ausgehend von einer oberen, ersten Position (Pos 1') erfolgt die Vermessung an den einzelnen Überwachungspunkten 21 entlang einer Bewegungsrichtung 23 Im Bereich einer unteren, zweiten Position (Pos 2') werden Fremdkörper 8 detektiert. Die aufgenommenen Messsignale werden bei Vorliegen eines Fremdkörpers 8 als eine Abweichung vom Referenzprofil 12 bzw. Sollprofil 13 aufgenommen. Im gezeigten Beispiel lösen zwei Fremdkörper 8 an den diskreten Überwachungspunkten b und d jeweils ein Messsignal zu Zeitpunkten aus, welche um die Abweichungen y,t(b) bzw. y,t(d) früher als vom Referenzprofil 12 bzw. Sollprofil 13 erwartet aufgenommen werden. Die Anlagensteuerung 7 führt den Abgleich durch und löst im Falle einer Abweichung außerhalb eines vorgebbaren Toleranzbereiches eine Unterbrechung oder einen Abbruch bzw. Stop des Verfahrens aus.

Fig. 5c,d stellen analog zu der obigen Beschreibung von Fig. 4c,d eine Möglichkeit zur Verwendung eines Überwachungsfeldes 22 für die Detektion von Fremdkörpern 8 dar. Die vom Lichtsensor 10, vorzugsweise einem positionssensitiven Detektor, aufgenommenen Messsignale werden als kumulatives Messsignal in die Anlagensteuerung übernommen. Der schraffiert hinterlegte Bereich in Fig. 5a-d des Sollprofils 13 stellt ein kalibriertes Toleranzfeld dar, welches z.B. aus einem vom Idealprofil abweichenden Referenzprofil 12 gebildet sein kann. Die Detektion von Fremdkörpern 8 kann durch Abweichung des Messsignals bzw. der Steigung des Messsignals über die Bewegung bzw. Zeit erfolgen. Im gezeigten Beispiel werden an zwei Stellen Abweichungen vom Referenzprofil 12 bzw. Sollprofil 13 aufgenommen werden. Die Anlagensteuerung 7 führt den Abgleich durch und löst im Falle einer Abweichung außerhalb eines vorgebbaren Toleranzbereiches eine Unterbrechung oder einen Abbruch bzw. Stop des Verfahrens aus.

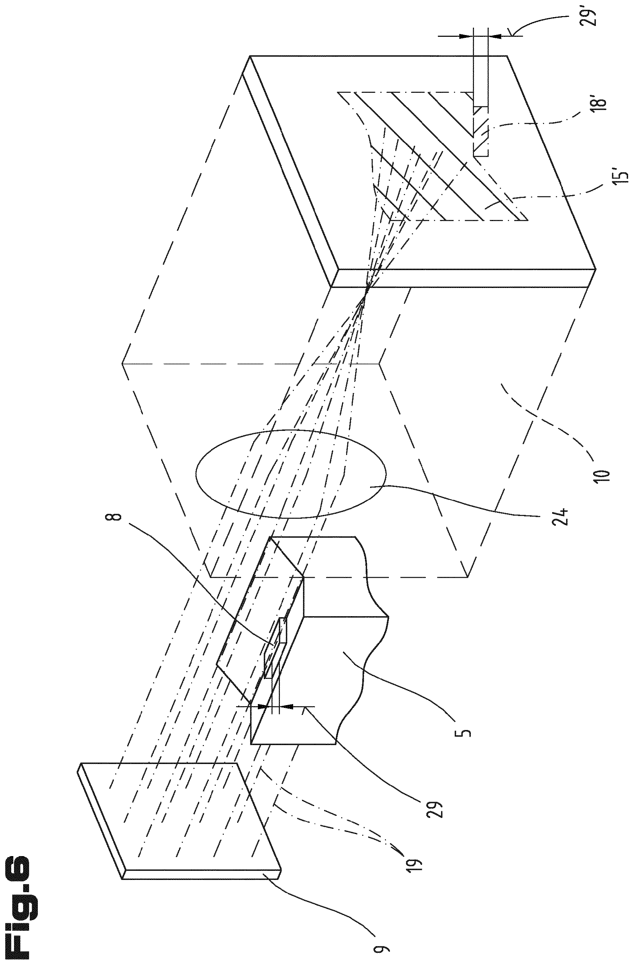

Fig. 6 ist eine weitere und gegebenenfalls für sich eigenständige Ausführungsform des erfindungsgemäßen Verfahrens, wobei die Messgenauigkeit durch Verwendung zumindest eines optischen Vergrößerungsmittels z.B. in Form eines Objektivs 24 gezeigt. Wiederum werden für gleiche Teile gleiche Bezugszeichen wie in den vorangegangenen Fig. 1 bis Fig. 5 verwendet und auf die detaillierte Beschreibung hierzu hingewiesen bzw. Bezug genommen. Wie in Fig. 6 dargestellt, wird in den Strahlengang des Lichts, welches sich von der Lichtquelle 9 zum Lichtsensor 10 erstreckt ein Objektiv 24 eingebracht. Das Objektiv 24 kann ein Teil des Lichtsensors 10 bzw. einer Lichterkennungsvorrichtung sein. Die Darstellung in Fig. 6 soll lediglich das Funktionsprinzip erläutern, wobei durch die Verwendung ein Objektivs 24 die ursprüngliche Fremdkörperhöhe 29 bzw. -größe des Fremdkörpers 8, welches sich auf dem Unterwerkzeug 5 befindet, vergrößert auf den Lichtsensor 10 trifft und ein vergrößertes Unterwerkzeugprofil 15' bzw. Fremdkörperprofil 18' mit einer vergrößert dargestellten Fremdkörperhöhe 29' erzeugt. Hierdurch kann die Auflösung bzw. Detektionsgenauigkeit des Lichtsensors 10 verbessert werden und die Vermessung des Fremdkörperprofils 18 erleichtert werden. Etwaige Korrekturmaßnahmen und Anpassungen hinsichtlich Verbindung mit der Anlagensteuerung, Bildverarbeitung und dergleichen können vom Fachmann ohne weiteres vorgenommen werden und bedürfen keiner genaueren Erläuterung.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Biegezelle
- 2: Pressbalken
- 3: Tischbalken
- 4: Oberwerkzeug
- 5: Unterwerkzeug
- 6: Blechteil
- 7: Anlagensteuerung
- 8: Fremdkörper
- 9: Lichtquelle
- 10: Lichtsensor
- 11: vorgebbare Position
- 12: Referenzprofil
- 13: Sollprofil
- 14: Oberwerkzeugprofil
- 15: Unterwerkzeugprofil
- 16: Blechteilprofil
- 17: Biegelinie
- 18: Fremdkörperprofil
- 19: Strahlenbündel
- 20: Schattenbild
- 21: Überwachungspunkt
- 22: Überwachungsfeld
- 23: Bewegungsrichtung
- 24: Objektiv
- 25: obere Werkzeugaufnahme
- 26: untere Werkzeugaufnahme
- 27: Ausrichtvorrichtung
- 28: Pressenraum
- 29: Fremdkörperhöhe

## Patentansprüche

1. Verfahren zur Detektion von Fremdkörpern (8), insbesondere Schneid- oder Stanzabfällen, zwischen zumindest einem Biegewerkzeug (4, 5) und einem umzuformenden Blechteil (6), umfassend die folgenden Schritte:
- Bereitstellen einer Biegezelle (1), umfassend zumindest ein Oberwerkzeug (4) und zumindest ein Unterwerkzeug (5), eine Anlagensteuerung (7), sowie zumindest eine Lichtquelle (9) und zumindest einen Lichtsensor (10) zur Detektion von Fremdkörpern (8),
- Bereitstellen zumindest des Blechteils (6) an einer vorgebbaren Position (11) zwischen Oberwerkzeug (4) und Unterwerkzeug (5) in einer Offenstellung der Biegezelle (1),
- Detektion von Fremdkörpern (8) zwischen dem Biegewerkzeug (4, 5) und des umzuformenden Blechteils (6),
wobei die Detektion von Fremdkörpern (8):
- mittels der zumindest einen Lichtquelle (9) und des zumindest einen Lichtsensors (10) durch eine Profilvermessung des zwischen Lichtquelle (9) und Lichtsensor (10) angeordneten zumindest einen Unterwerkzeugs (5) erfolgt, und
- ein Abgleich des Unterwerkzeugprofils (15) mit vorgebbaren Referenz- (12) und/oder Sollprofilen (13) in einer Anlagensteuerung (7) erfolgt,
- und bei Übereinstimmung die Umformung des Blechteils (6) eingeleitet wird,
- oder bei Abweichung eine Unterbrechung oder einen Abbruch des Verfahrens eingeleitet wird, und
wobei die zumindest eine Lichtquelle (9) und/oder der zumindest eine Lichtsensor (10) während der Profilvermessung entlang der Bewegungsrichtung (23) des Biegewerkzeugs (4, 5) gegenläufig verschoben werden und die zumindest eine Lichtquelle (9) und/oder der zumindest eine Lichtsensor (10) mittels zumindest einer Ausrichtvorrichtung (27) einander kontinuierlich zugewandt werden.

2. Verfahren nach Anspruch 1 **dadurch gekennzeichnet, dass** die Profilvermessung seitlich, bevorzugt orthogonal, auf die Bewegungsrichtung (23) des Oberwerkzeugs (4) und entlang einer Biegelinie (17) des Unterwerkzeugs (5) erfolgt.

3. Verfahren nach Anspruch 1 **dadurch gekennzeichnet, dass** bei der Detektion von Fremdkörpern (8) zusätzlich eine Profilvermessung des Blechteils (6) und/oder des Oberwerkzeugs (4) erfolgt und ein Abgleich des Blechteilprofils (16) und/oder des Oberwerkzeugprofils (14) mit vorgebbaren Referenz- (12) und/oder Sollprofilen (13) in einer Anlagensteuerung (7) erfolgt.

4. Verfahren nach einem der vorhergehenden Ansprüche **dadurch gekennzeichnet, dass** die Profilvermessung durch Emission eines parallelen Strahlenbündels (19) von der zumindest einen Lichtquelle (9) und Detektion eines Schattenbildes (20) vom zumindest einen Lichtsensor (10) erfolgt.

5. Verfahren nach Anspruch 4 **dadurch gekennzeichnet, dass** zur Erzeugung des parallelen Strahlenbündels (19) zumindest eine als Laser ausgebildete Lichtquelle (9) verwendet wird.

6. Verfahren nach Anspruch 1 **dadurch gekennzeichnet, dass** die Bewegung der zumindest einen Lichtquelle (9) und/oder des zumindest einen Lichtsensor (10) während der Profilvermessung mit der Bewegung des Oberwerkzeugs (4) gekoppelt ist.

7. Verfahren nach einem der vorhergehenden Ansprüche **dadurch gekennzeichnet, dass** zur Profilvermessung zumindest ein positionssensitiver, bevorzugt 2-dimensionaler, Lichtsensor verwendet wird.

8. Verfahren nach einem der Ansprüche 1, 6 und 7 **dadurch gekennzeichnet, dass** der Abgleich durch den Vergleich von Messzeitpunkten des Unterwerkzeugprofils (15) und/oder des Blechteilprofils (16) mit vorgebbaren Zeitpunkten korrespondierender Referenz- (12) und/oder Sollprofilen (13) erfolgt.

9. Verfahren nach einem der vorhergehenden Ansprüche **dadurch gekennzeichnet, dass** zur Erhöhung der Auflösung des Unterwerkzeugprofils (5) und/oder des Blechteilprofils (6) und/oder des Oberwerkzeugprofils (14) bei der Profilvermessung ein im Strahlengang Lichts vor dem zumindest einen Lichtsensor (10) angeordnetes Objektiv (24) verwendet wird.

10. Verfahren nach einem der vorhergehenden Ansprüche **dadurch gekennzeichnet, dass** zur Erstellung des Referenzprofils (12) des Unterwerkzeugs (5) und/oder des Oberwerkzeugs (4) eine Profilvermessung nach einem erstmaligen Einbau oder nach einem Wiedereinbau bzw. Rüsten des Unter- und/oder Oberwerkzeugs (4,5) erfolgt.

## Claims

1. A method for detecting foreign objects (8), in particular cutting or punching waste, between at least a bending tool (4, 5) and a sheet metal part (6) to be formed, comprising the following steps:
- providing a bending cell (1), comprising at least one upper tool (4) and at least one lower tool (5), a system control (7), as well as at least one light source (9) and at least one light sensor (10) for detecting foreign objects (8),
- providing at least the sheet metal part (6) at a predefinable position (11) between the upper tool (4) and the lower tool (5) in an opened state of the bending cell (1),
- detecting foreign objects (8) between the bending tool (4, 5) and the sheet metal part (6) to be formed,
wherein the detection of foreign objects (8):
- is carried out with the aid of the at least one light source (9) and the at least one light sensor (10) by performing a profile measurement of the at least one lower tool (5) arranged between the light source (9) and the light sensor (10), and
- the lower tool profile (15) is compared with predefinable reference profiles (12) and/or target profiles (13) in a system control (7),
- and if they match, the forming of the sheet metal part (6) is initiated,
- or, if they deviate from one another, an interruption or a termination of the process is initiated, and
wherein, during the profile measurement, the at least one light source (9) and/or the at least one light sensor (10) are displaced in opposite directions along the direction of movement (23) of the bending tool (4, 5), and the at least one light source (9) and/or the at least one light sensor (10) are continuously turned towards one another by means of at least one alignment device (27).

2. The method according to claim 1, **characterized in that** the profile measurement takes place laterally, preferably orthogonally, to the direction of movement (23) of the upper tool (4) and along a bending line (17) of the lower tool (5).

3. The method according to claim 1, **characterized in that**, during the detection of foreign objects (8), a profile measurement of the sheet metal part (6) and/or of the upper tool (4) additionally takes place, and a comparison of the sheet metal part profile (16) and/or the upper tool profile (14) with predefinable reference profiles (12) and/or target profiles (13) takes place in a system control (7).

4. The method according to one of the preceding claims, **characterized in that** the profile measurement is carried out by emission of a parallel bundle of rays (19) from the at least one light source (9) and detection of a shadow image (20) by the at least one light sensor (10).

5. The method according to claim 4, **characterized in that** for generating the parallel bundle of rays (19), at least one light source (9) formed as a laser is used.

6. The method according to claim 1, **characterized in that** the movement of the at least one light source (9) and/or of the at least one light sensor (10) is coupled with the movement of the upper tool (4) during the profile measurement.

7. The method according to one of the preceding claims, **characterized in that** at least one position-sensitive, preferably 2-dimensional, light sensor is used for the profile measurement.

8. The method according to one of claims 1, 6 and 7, **characterized in that** the comparison takes place by comparing measuring time points of the lower tool profile (15) and/or of the sheet metal part profile (16) with predefinable time points of corresponding reference profiles (12) and/or target profiles (13).

9. The method according to one of the preceding claims, **characterized in that** for increasing the resolution of the lower tool profile (5) and/or the sheet metal part profile (6) and/or the upper tool profile (14) during the profile measurement, an objective (24) arranged in the beam path of the light in front of the at least one sensor (10) is used.

10. The method according to one of the preceding claims, **characterized in that** for creating a reference profile (12) of the lower tool (5) and/or of the upper tool (4), a profile measurement is carried out after an initial installation or after a re-installation and/or mounting of the lower and/or upper tool (4, 5).

## Revendications

1. Procédé de détection de corps étrangers (8), plus particulièrement de déchets de coupe ou d'estampage, entre au moins un outil de pliage (4, 5) et une pièce de tôle à former (6), comprenant les étapes suivantes :
- mise à disposition d'une cellule de pliage (1), comprenant au moins un outil supérieur (4) et au moins un outil inférieur (5), une commande d'installation (7), ainsi qu'au moins une source de lumière (9) et au moins un capteur de lumière (10) pour la détection de corps étrangers (8),
- mise à disposition d'au moins une pièce de tôle (6) à une position (11) pouvant être prédéterminée entre l'outil supérieur (4) et l'outil inférieur (5) dans une position ouverte de la cellule de pliage (1),
- détection de corps étrangers (8) entre l'outil de pliage (4, 5) et de la pièce de tôle (6) à former,
dans lequel la détection de corps étrangers (8) :
- a lieu au moyen de l'au moins une source de lumière (9) et de l'au moins un capteur de lumière (10) par une mesure du profil de l'au moins un outil inférieur (5) disposé entre la source de lumière (9) et le capteur de lumière (10) et
- un réglage du profil de l'outil inférieur (15) a lieu avec des profils de référence (12) et/ou de consigne (13) pouvant être prédéterminés dans une commande d'installation (7),
- et, lors d'une concordance, le formage de la pièce de tôle (6) est initiée,
- ou, lors d'un écart, une interruption ou une annulation du procédé est initiée et
dans lequel l'au moins une source de lumière (9) et/ou l'au moins un capteur de lumière (10) sont coulissés dans des directions opposées pendant la mesure du profil le long de la direction de déplacement (23) de l'outil de pliage (4, 5) et l'au moins une source de lumière (9) et/ou l'au moins un capteur de lumière (10) sont orientés l'un vers l'autre de manière continue au moyen d'au moins un dispositif d'orientation (27).

2. Procédé selon la revendication 1, **caractérisé en ce que** la mesure du profil est effectuée latéralement, de préférence de manière orthogonale, par rapport à la direction de déplacement (23) de l'outil supérieur (4) et le long d'une ligne de pliage (17) de l'outil inférieur (5).

3. Procédé selon la revendication 1, **caractérisé en ce que**, lors de la détection de corps étrangers (8), une mesure du profil de la pièce de tôle (6) et/ou de l'outil supérieur (4) a en outre lieu et un réglage du profil de la pièce de tôle (16) et/ou du profil de l'outil supérieur (14) avec des profils de référence (12) et/ou de consigne (13), pouvant être déterminés, dans une commande d'installation (7).

4. Procédé selon l'une des revendications précédentes, **caractérisé en ce que** la mesure du profil a lieu grâce à l'émission d'un faisceau parallèle (19) par l'au moins une source de lumière (9) et la détection d'une silhouette (20) par l'au moins un capteur de lumière (10).

5. Procédé selon la revendication 4, **caractérisé en ce que**, pour la production du faisceau parallèle (19), est utilisée au moins une source de lumière (9) conçue comme un laser.

6. Procédé selon la revendication 1, **caractérisé en ce que** le déplacement de l'au moins une source de lumière (9) et/ou l'au moins un capteur de lumière (10) est couplé, pendant la mesure du profil, avec le déplacement de l'outil supérieur (4).

7. Procédé selon l'une des revendications précédentes, **caractérisé en ce que**, pour la mesure du profil, est utilisé au moins un capteur de lumière sensible à la position, de préférence bidimensionnel.

8. Procédé selon l'une des revendications 1, 6 et 7, **caractérisé en ce que** le réglage a lieu grâce à la comparaison de moments de mesure du profil de l'outil inférieur (15) et/ou du profil de la pièce de tôle (16) avec des moments, pouvant être prédéterminés, de profils de référence (12) et/ou de consigne (13) correspondants.

9. Procédé selon l'une des revendications précédentes, **caractérisé en ce que**, pour l'augmentation de la résolution du profil de l'outil inférieur (5) et/ou du profil de la pièce de tôle (6) et/ou du profil de l'outil supérieur (14), lors de la mesure du profil, est utilisé un objectif (24) disposé, dans le trajet de la lumière, avant l'au moins un capteur de lumière (10).

10. Procédé selon l'une des revendications précédentes, **caractérisé en ce que**, pour la création du profil de référence (12) de l'outil inférieur (5) et/ou de l'outil supérieur (4), a lieu une mesure du profil avec une première insertion ou avec une nouvelle insertion respectivement un nouveau montage de l'outil inférieur et/ou de l'outil supérieur (4, 5).
